# EUROPEAN PATENT SPECIFICATION

(11) **EP 2 759 928 B1**
(45) Date of publication and mention of the grant of the patent: **22.07.2020**
(21) Application number: 13153063.6
(22) Date of filing: 29.01.2013
(51) Int. Cl.: G06F 9/451

(54) **Modal progress dialog**
Modaler Fortschrittsdialog
Dialogue de progression modale

(43) Date of publication of application: 30.07.2014
(73) Proprietor: BlackBerry Limited, Waterloo, Ontario N2K 0A7 (CA)
(72) Inventor: Dodge, Danny Thomas, Kanata, Ontario K2K 0B3 (CA); Cardamore, Daniel, Kanata, Ontario K2K 0B3 (CA)
(74) Representative: Vigand, Philippe

(56) References cited:
- EP-A2- 0 394 160
- US-A- 6 038 588
- US-A1- 2012 159 325

## Description

### BACKGROUND

### 1. Technical Field

The present disclosure relates to the field of human-machine interfaces (HMI). In particular, to a system and method for modal progress dialog.

### 2. Related Art

Various computing platforms provide for the execution of applications. The applications may include native applications and/or 3^{rd}-part applications. The applications access and use system resources (e.g. objects in a file system) by invoking system interfaces (e,g, application programming interfaces (API)). In so doing, the applications may be coded with little or no insight or knowledge into the detailed operation and control of the system resources.

When an application invokes a system interface to access or use a system resource there is typically a delay before the system interface responds. The delay can vary from a virtually human-imperceptible time (e.g. on the order of 10's of mS for some local operations) to a user-frustratingly long time (e.g. on the order of 10's of sec to minutes for some network operations). In the absence of some feedback, the user may mistakenly perceive a long delay as misoperation or failure of the application.

US2012/0159325 A1 describes a user interface for editing electronic documents and the display of a progress meter which may be delayed for long running tasks.

US6038588 describes a method, apparatus, and computer readable medium for creating, updating, and displaying a modal progress dialog window.

EP0394160A2 describes a dynamic progress marker icon.

### BRIEF DESCRIPTION OF DRAWINGS

The system and method may be better understood with reference to the following drawings and description. The components in the figures are not necessarily to scale, emphasis instead being placed upon illustrating the principles of the disclosure. Moreover, in the figures, like referenced numerals designate corresponding parts throughout the different views.

Other systems, methods, features and advantages will be, or will become, apparent to one with skill in the art upon examination of the following figures and detailed description. It is intended that all such additional systems, methods, features and advantages be included with this description and be protected by the following claims.
Fig. 1 is a schematic representation of a system for modal progress dialog in a typical operating environment.
Fig. 2 is a schematic representation of a progress dialog.
Fig. 3 is a schematic representation of an exemplary progress dialog 104.
Fig. 4 is a flow diagram representing a method for modal progress dialog.
Fig. 5 is a further schematic representation of a system for modal progress dialog.

### DETAILED DESCRIPTION

A system and method for modal progress dialog may provide progress feedback to a user when an application accesses or uses a system resource on a computing platform. The application may be a native or a 3^{rd}-party application. The application may access or use the system resource by invoking an operation via a system interface. The system resource operation may include, for example, a file system operation, a network operation, an input/output (I/O) operation or other similar operations. Execution of the application may be blocked pending receiving a result of the system resource operation. The progress feedback may be provided by the system interface without the involvement of the application. The progress feedback may include displaying a progress dialog. The progress dialog may be displayed in a window associated with the application. The progress dialog may include a visual indication of a degree of completion of the system resource operation. The progress dialog may mitigate a user misinterpreting delays in completion of the system resource operation as misoperation or failure of the application.

The system and method for modal progress dialog may allow applications that access or use system resources to be coded with little or no insight or knowledge into the detailed operation and control of the system resources while still providing the user with progress feedback. The progress feedback may be provided by system software while the application is blocked pending receipt of the result of the system resource operation.

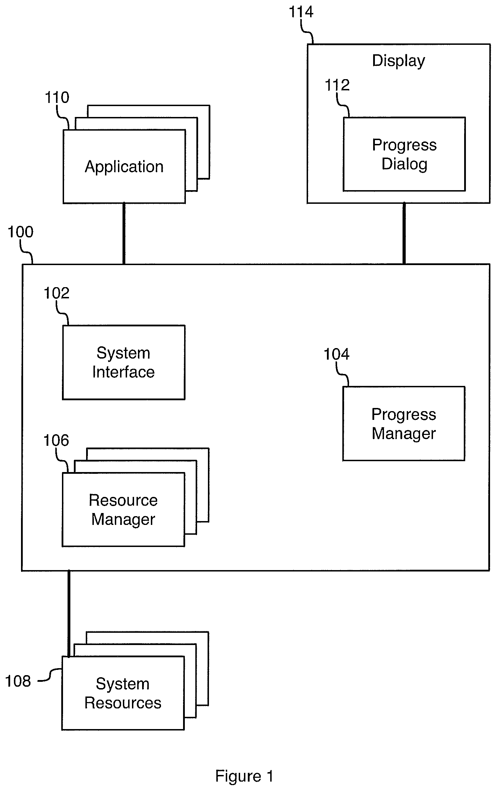

Figure 1 is a schematic representation of a system for modal progress dialog in a typical operating environment. The system 100 may include components of a computing platform and entities executable on the computing platform, such as, a system interface 102, a progress manager 104 and one or more resource managers 106. The system interface 102 may include an application programming interface (API) with entry points that may be invoked to access or use one or more system resources 108. The system interface 102 may be invoked when an action request associated with a system resource is received. The action request may be received from any of one or more applications 110 or other entities executable on the computing platform. The action request may, at least partially, be processed by one or more system libraries (not illustrated).

Each of one or more resource managers 106 may provide management of, and control access to, one or more system resources 108. The action request may, at least partially, be processed by one or more resource managers 106. The resource managers 106 may include, for example, a file system manager, network protocol stack or I/O controller. The system resources 108 may include, for example, files and directories in a local or remote file system, network streams, I/O pipes and other similar system resources. The action request may include operations such as, for example, file open, file read, file write, file copy, file or directory move, file transfer, and other similar operations on system resources 108.

The progress manager 104 may interoperate with the system interface 102, the one or more resource managers 106 and other entities executable on the computing platform. The progress manager 104 may determine when a progress dialog 112 is to be displayed during the processing of an action request. Some action requests may be completed in a time duration that is perceived as immediate or acceptably short by a user. Other action requests may be completed in a time duration that is perceived as long or objectionable by the user. When no feedback is provided to the user for an action request that has long or objectionable duration (delay), the user may mistakenly perceive the delay as misoperation or failure of the application 110. The progress manager 104 may determine when a progress dialog 112 is to be displayed when an expected duration of processing the action request exceeds a threshold. The expected duration may be a function of any one or more of the action requested, the system resource associated with the action requested, a location of the system resource and a measured time to execute a portion of the action (e.g. the time required to complete a first 1MB or a previous 5% of the operation). When the progress manager 104 determines that a progress dialog 112 is to be displayed, the progress dialog may be shown on a display 114 associated with the computing platform.

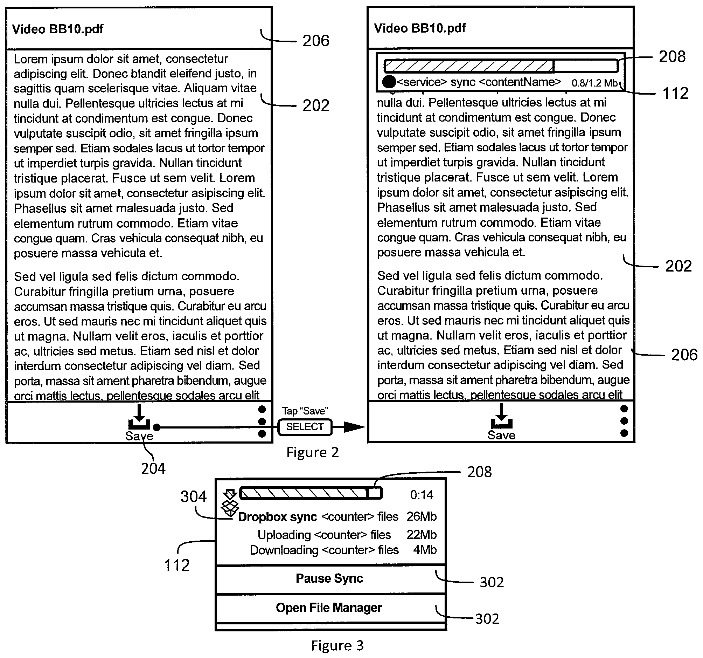

Figure 2 is a schematic representation of an example progress dialog. An application 110, for example a document viewer, presents a user interface (UI) 202 on a display 114. The UI 202 may be contained in a window 206 that occupies a portion of the display 114. Alternatively, the UI 202 or the window 206 may occupy substantially the entire display 114 (a.k.a. full screen). The application 110 may be responsive to various control inputs including, for example, an on-screen touch control 204. Responsive to a control input, the application 110 may invoke the system interface 102 with an action request. In the illustrated example the control input is the selection of a 'Save' button 204 which may cause the document viewer application 110 to invoke the system interface 102 with a 'file write' action request. When the progress manager 104 determines that the 'file write' operation has expected duration that exceeds a threshold, the progress manager 104 may cause the progress dialog 112 to be displayed in the UI 202 or in the window 206 associated with the application 110. The application 110 may not be involved in the displaying of the progress dialog 112 and may be execution-blocked or otherwise suspended pending receipt of the result of the action request. The progress dialog 112 may include a progress indicator 208. The progress indicator 208 may be updated periodically as the system operation progresses and/or as time passes to provide the user with feedback.

Figure 3 is a schematic representation of an exemplary progress dialog 112. The progress dialog 112 may contain a progress indicator 208 that provides a visual indication of a degree of completion of the system resource operation that may be updated periodically. The progress indicator 208 may take various alternative visual appearances. The progress dialog 112 may include one or more controls 302 that may be operated by the user to, for example, pause, resume or cancel the system resource operation. The progress dialog 112 may also include various identification and/or status information elements 304.

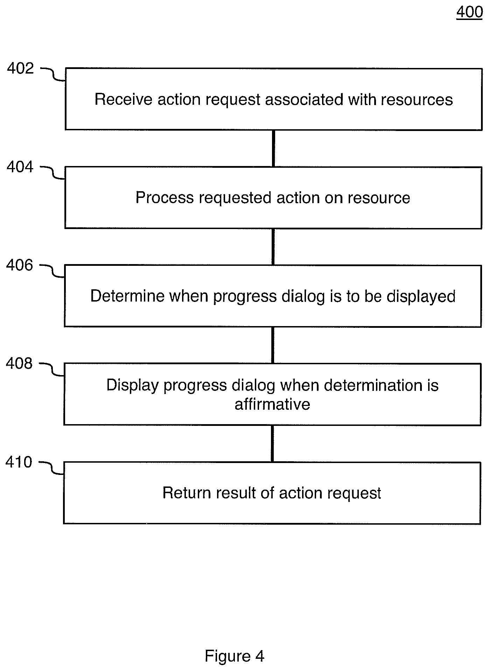

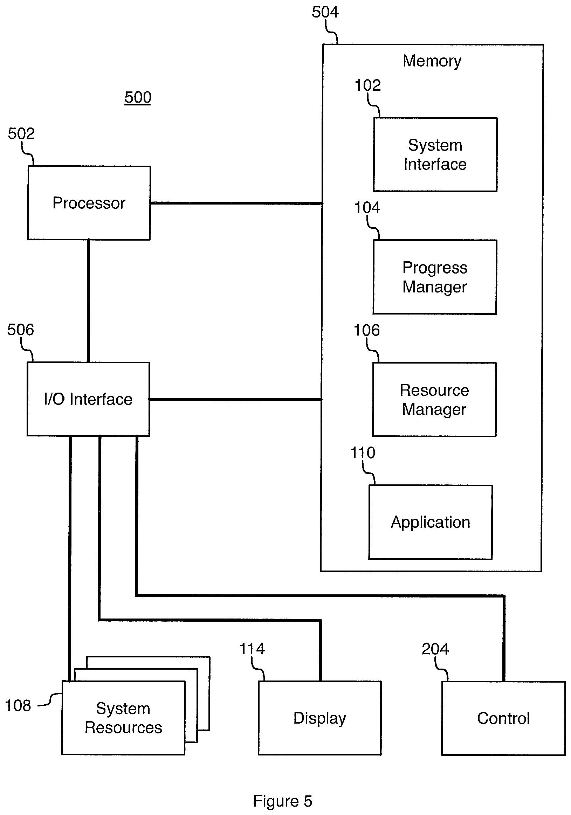

Figure 4 is a flow diagram representing a method for modal progress dialog. The method 400 may be, for example, implemented using the systems 100 and 500 described herein with reference to Figures 1 and 5. The method 400 may include receiving an action request 402 associated with a system resource 108. The action request may, for example, be received from an application 110 at a system interface 102. The action request may be processed as an operation on the system resource 404. A determination 406 may be made for when a progress dialog 112 is to be displayed. The determination may be affirmative, for example, when the operation has expected duration that exceeds a threshold. A progress dialog 112 may be displayed 408 when the determination is affirmative. The progress dialog 112 may be display in the UI 202 or in the window 206 associated with the application 110. A result of the action request may returned 410 to application 110. The result may be returned when the operation is complete or in some way terminated. Alternatively, multiple results may be return at various points during the processing of the operation. When the operation has completed or is terminated, displaying of the progress dialog 112 may cease.

Figure 5 is a further schematic representation of a system for modal progress dialog. The system 500 comprises a processor 502, memory 504 (the contents of which are accessible by the processor 502) and an I/O interface 506. The memory 504 may store instructions which when executed using the process 502 may cause the system 500 to render the functionality associated with system interface 102, progress manager 104, resource manager 106 and applications 110 as described herein. In addition the memory 504 may store data including, for example, display buffers associated with progress dialog 112 and the UI 202.

The processor 502 may comprise a single processor or multiple processors that may be disposed on a single chip, on multiple devices or distributed over more that one system. The processor 502 may be hardware that executes computer executable instructions or computer code embodied in the memory 504 or in other memory to perform one or more features of the system. The processor 502 may include a general purpose processor, a central processing unit (CPU), a graphics processing unit (GPU), an application specific integrated circuit (ASIC), a digital signal processor (DSP), a field programmable gate array (FPGA), a digital circuit, an analog circuit, a microcontroller, any other type of processor, or any combination thereof.

The memory 504 may comprise a device for storing and retrieving data, processor executable instructions, or any combination thereof. The memory 504 may include non-volatile and/or volatile memory, such as a random access memory (RAM), a read-only memory (ROM), an erasable programmable read-only memory (EPROM), or a flash memory. The memory 504 may comprise a single device or multiple devices that may be disposed on one or more dedicated memory devices or on a processor or other similar device. Alternatively or in addition, the memory 504 may include an optical, magnetic (hard-drive) or any other form of data storage device.

The memory 504 may store computer code, such as code to render functions associated with system interface 102, progress manager 104, resource manager 106 and applications 110 as described herein. The computer code may include instructions executable with the processor 502. The computer code may be written in any computer language, such as C, C++, assembly language, channel program code, and/or any combination of computer languages. The memory 504 may store information in data structures including, for example, data elements used in support of progress dialog 112 and progress indicator 208.

The I/O interface 506 may be used to connect devices such as, for example, system resource 108, display 114, control 204, and to other components of the system 500.

All of the disclosure, regardless of the particular implementation described, is exemplary in nature, rather than limiting. The systems 100 and 500 may include more, fewer, or different components than illustrated in Figures 1 and 5. Furthermore, each one of the components of systems 100 and 500 may include more, fewer, or different elements than is illustrated in Figures 1 and 5. Flags, data, databases, tables, entities, and other data structures may be separately stored and managed, may be incorporated into a single memory or database, may be distributed, or may be logically and physically organized in many different ways. The components may operate independently or be part of a same program or hardware. The components may be resident on separate hardware, such as separate removable circuit boards, or share common hardware, such as a same memory and processor for implementing instructions from the memory. Programs may be parts of a single program, separate programs, or distributed across several memories and processors.

The functions, acts or tasks illustrated in the figures or described may be executed in response to one or more sets of logic or instructions stored in or on computer readable media. The functions, acts or tasks are independent of the particular type of instructions set, storage media, processor or processing strategy and may be performed by software, hardware, integrated circuits, firmware, micro code and the like, operating alone or in combination. Likewise, processing strategies may include multiprocessing, multitasking, parallel processing, distributed processing, and/or any other type of processing. In one embodiment, the instructions are stored on a removable media device for reading by local or remote systems. In other embodiments, the logic or instructions are stored in a remote location for transfer through a computer network or over telephone lines. In yet other embodiments, the logic or instructions may be stored within a given computer such as, for example, a CPU.

## Claims

1. A method for displaying modal progress dialogs (112) on a display (144) based on expected durations of processing action requests, implemented by a processor, comprising:
receiving an action request associated with a resource;
processing the action on the resource;
determining, by a progress manager (104), when a progress dialog (112) is to be displayed, the determination triggered by an expected duration of processing the action request;
displaying the progress dialog (112) on a display (114) when the determination is triggered; and
returning a result of the action request;
where the expected duration is a function of the location of the resource.

2. The method for modal progress dialog of claim 1, where the action request is received from an application at a system interface.

3. The method for modal progress dialog of claim 2, where execution of the application is blocked until the result of the action request is received by the application.

4. The method for modal progress dialog of any one of claims 1 to 3, where the requested action is any of: a file system operation, a network operation and an input/output operation.

5. The method for modal progress dialog of any one of claims 1 to 4, where the determination that the progress dialog is to be displayed is triggered when the expected duration of processing the action exceeds a threshold.

6. The method for modal progress dialog of claim 5, where the expected duration is a function of any two or more of: the action requested, the resource associated with the action requested, a measured time to execute a portion of the action.

7. The method for modal progress dialog of claim 2, where the progress dialog is displayed in a window associated with the application.

8. The method for modal progress dialog of any one of claims 1 to 7, where the progress dialog includes a visual indication of an approximate degree of completion of the processing of the action.

9. The method for modal progress dialog of any one of claims 1 to 8, where the progress dialog includes a control operable by a user to cancel the action requested

10. The method for modal progress dialog of claim 9, where the returned result of the action request indicates a failure of the action when the user has operated the control to cancel the action.

11. A system for modal progress dialog comprising:
a processor; and
a memory, coupled to the processor, containing instructions executable by the processor for performing the method any one of claims 1 to 10.

## Patentansprüche

1. Verfahren zum Anzeigen von modalen Fortschrittsdialogen (112) auf Basis der erwarteten Dauer von Verarbeitungsaktionsanforderungen auf einer Anzeige (144), das von einem Prozessor implementiert wird und Folgendes umfasst:
Empfangen einer Aktionsanforderung, die mit einer Ressource verknüpft ist;
Verarbeiten der Aktion in der Ressource;
Bestimmen durch einen Fortschrittsverwalter (104), wann ein Fortschrittsdialog (112) anzuzeigen ist, wobei die Bestimmung durch eine erwartete Dauer der Verarbeitung der Aktionsanforderung ausgelöst wird;
Anzeigen des Fortschrittsdialogs (112) auf einer Anzeige (114), wenn die Bestimmung ausgelöst wird; und
Zurückgeben eines Ergebnisses der Aktionsanforderung;
wobei die erwartete Dauer eine Funktion des Standorts der Ressource ist.

2. Verfahren für einen modalen Fortschrittsdialog nach Anspruch 1, wobei die Aktionsanforderung von einer Anwendung an einer Systemschnittstelle empfangen wird.

3. Verfahren für einen modalen Fortschrittsdialog nach Anspruch 2, wobei die Ausführung der Anwendung blockiert ist, bis das Ergebnis der Aktionsanforderung von der Anwendung empfangen wird.

4. Verfahren für einen modalen Fortschrittsdialog nach einem der Ansprüche 1 bis 3, wobei die angeforderte Aktion eines von Folgendem ist: eine Dateisystemoperation, eine Netzwerkoperation und eine Eingabe-/Ausgabeoperation.

5. Verfahren für einen modalen Fortschrittsdialog nach einem der Ansprüche 1 bis 4, wobei die Bestimmung, dass der Fortschrittsdialog anzuzeigen ist, ausgelöst wird, wenn die erwartete Dauer der Verarbeitung der Aktion einen Schwellwert überschreitet.

6. Verfahren für einen modalen Fortschrittsdialog nach Anspruch 5, wobei die erwartete Dauer eine Funktion von beliebigen zwei oder mehreren von Folgendem ist: die angeforderte Aktion, die mit der angeforderten Aktion verknüpfte Ressource, eine zum Ausführen eines Abschnitts der Aktion gemessene Zeit.

7. Verfahren für einen modalen Fortschrittsdialog nach Anspruch 2, wobei der Fortschrittsdialog in einem Fenster, das mit der Anwendung verknüpft ist, angezeigt wird.

8. Verfahren für einen modalen Fortschrittsdialog nach einem der Ansprüche 1 bis 7, wobei der Fortschrittsdialog eine visuelle Anzeige eines ungefähren Grades der Fertigstellung der Verarbeitung der Aktion beinhaltet.

9. Verfahren für einen modalen Fortschrittsdialog nach einem der Ansprüche 1 bis 8, wobei der Fortschrittsdialog eine Steuerung beinhaltet, die von einem Benutzer zum Abbrechen der angeforderten Aktion betätigt werden kann.

10. Verfahren für einen modalen Fortschrittsdialog nach Anspruch 9, wobei das zurückgegebene Ergebnis der Aktionsanforderung einen Fehlschlag der Aktion anzeigt, wenn der Benutzer die Steuerung zum Abbrechen der Aktion betätigt hat.

11. System für einen modalen Fortschrittsdialog, das Folgendes umfasst:
einen Prozessor und
einen Speicher, der an den Prozessor gekoppelt ist und Anweisungen enthält, die vom Prozessor zum Durchführen des Verfahrens nach einem der Ansprüche 1 bis 10 durchführbar sind.

## Revendications

1. Procédé pour afficher des dialogues de progression modaux (112) sur un afficheur (144) sur la base de durées prévues de traitement de demandes d'action, mis en œuvre par un processeur, comprenant :
la réception d'une demande d'action associée à une ressource ;
le traitement de l'action sur la ressource ;
la détermination, par un gestionnaire de progression (104), de quand un dialogue de progression (112) doit être affiché, la détermination déclenchée par une durée prévue de traitement de la demande d'action ;
l'affichage du dialogue de progression (112) sur un afficheur (114) lorsque la détermination est déclenchée ; et
le renvoi d'un résultat de la demande d'action ;
où la durée prévue est fonction de l'emplacement de la ressource.

2. Procédé pour un dialogue de progression modal selon la revendication 1, où la demande d'action est reçue en provenance d'une application au niveau d'une interface système.

3. Procédé pour un dialogue de progression modal selon la revendication 2, où l'exécution de l'application est bloquée jusqu'à ce que le résultat de la demande d'action soit reçu par l'application.

4. Procédé pour un dialogue de progression modal selon l'une quelconque des revendications 1 à 3, où l'action demandée est l'une quelconque parmi : une opération de système de fichiers, une opération de réseau et une opération d'entrée/sortie.

5. Procédé pour un dialogue de progression modal selon l'une quelconque des revendications 1 à 4, où la détermination que le dialogue de progression doit être affiché est déclenchée lorsque la durée prévue de traitement de l'action dépasse un seuil.

6. Procédé pour un dialogue de progression modal selon la revendication 5, où la durée prévue est fonction de deux quelconques ou plus parmi : l'action demandée, la ressource associée à l'action demandée, un temps mesuré pour exécuter une partie de l'action.

7. Procédé pour un dialogue de progression modal selon la revendication 2, où le dialogue de progression est affiché dans une fenêtre associée à l'application.

8. Procédé pour un dialogue de progression modal selon l'une quelconque des revendications 1 à 7, où le dialogue de progression inclut une indication visuelle d'un degré approximatif d'achèvement du traitement de l'action.

9. Procédé pour un dialogue de progression modal selon l'une quelconque des revendications 1 à 8, où le dialogue de progression inclut une commande actionnable par un utilisateur pour annuler l'action demandée.

10. Procédé pour un dialogue de progression modal selon la revendication 9, où le résultat renvoyé de la demande d'action indique un échec de l'action lorsque l'utilisateur a actionné la commande pour annuler l'action.

11. Système pour un dialogue de progression modal comprenant :
un processeur ; et
une mémoire, couplée au processeur, contenant des instructions exécutables par le processeur pour effectuer le procédé selon l'une quelconque des revendications 1 à 10.
